(19) Europäisches Patentamt
European Patent Office
Office européen des brevets

(11) **EP 1 494 841 B1**

(12) **EUROPÄISCHE PATENTSCHRIFT**

(45) Veröffentlichungstag und Bekanntmachung des Hinweises auf die Patenterteilung:
**02.01.2013  Patentblatt 2013/01**

(21) Anmeldenummer: **03729817.1**

(22) Anmeldetag: **08.04.2003**

(51) Int Cl.:
*B29C 67/00* (2006.01)  *B22F 3/105* (2006.01)
*B29C 41/36* (2006.01)  *B29C 41/12* (2006.01)
*B05D 1/26* (2006.01)

(86) Internationale Anmeldenummer:
**PCT/DE2003/001148**

(87) Internationale Veröffentlichungsnummer:
**WO 2003/086726 (23.10.2003 Gazette 2003/43)**

(54) **VERFAHREN UND VORRICHTUNG ZUM AUFTRAGEN VON FLUIDEN**

METHOD AND DEVICE FOR APPLYING FLUIDS

PROCEDE ET DISPOSITIF POUR APPLIQUER DES FLUIDES

(84) Benannte Vertragsstaaten:
**AT BE BG CH CY CZ DE DK EE ES FI FR GB GR HU IE IT LI LU MC NL PT RO SE SI SK TR**

(30) Priorität: **11.04.2002  DE 10216013**

(43) Veröffentlichungstag der Anmeldung:
**12.01.2005  Patentblatt 2005/02**

(73) Patentinhaber: **Voxeljet Technology GmbH**
**86316 Friedberg (DE)**

(72) Erfinder:
• **HÖCHSMANN, Rainer**
**86682 Genderkingen (DE)**

• **KUDERNATSCH, Alexander**
**86163 Augsburg (DE)**

(74) Vertreter: **Wagner, Sigrid**
**Wagner + Helbig**
**Patentanwälte**
**Pfarrstraße 14**
**80538 München (DE)**

(56) Entgegenhaltungen:
WO-A-95/18715    DE-A- 4 325 573
DE-C- 10 117 875    US-A- 4 239 715
US-A- 5 730 925    US-A- 5 902 537
US-A- 5 934 343

**Beschreibung**

Die vorliegende Erfindung bezieht sich auf ein Verfahren und eine Vorrichtung zum Auftragen von Fluiden gemäß dem Oberbegriff der unabhängigen Ansprüche, 1 und 5. Weiterhin betrifft die Erfindung auch die Verwendung einer solchen Vorrichtung.

In vielen Bereichen der Technik sollen Fluide und dabei insbesondere Partikelmaterialien in dünnen Schichten auf einen Träger aufgetragen werden können. Hierbei ist es häufig auch notwendig, dass die aufgetragenen Schichten eine möglichst glatte Oberfläche aufweisen. Beispielsweise spielt bei Rapid-Prototyping-Verfahren der glatte Auftrag von zu verbindendem Partikelmaterial eine wichtige Rolle.

Beispielsweise ist aus der deutschen Patentanmeldung DE 198 53 834 ein Rapid-Prototyping-Verfahren zum Aufbau von Gussmodellen bekannt. Hierbei wird unbehandeltes Partikelmaterial auf eine Bauplattform in einer dünnen Schicht aufgetragen. Danach wird ein Bindemittel auf das gesamte Partikelmaterial in einer möglichst feinen Verteilung aufgesprüht. Anschlie-βend wird darüber auf ausgewählte Bereiche ein Härter dosiert, wodurch erwünschte Bereiche des Partikelmaterials verfestigt werden. Nach mehrmaliger Wiederholung dieses Vorgangs kann ein individuell geformter Körper aus dem gebundenen Partikelmaterial bereitgestellt werden.

Wird beispielsweise bei einem derartigen Rapid-Prototyping-Verfahren als Partikelmaterial ein Quarzsand verwendet und als Bindemittel ein Furanharz, kann mit Hilfe einer schwefeligen Säure als Härtermaterial eine Gussform hergestellt werden, die aus üblicherweise bei der Formherstellung verwendeten und daher dem Fachmann bekannten Materialien besteht.

Schwierigkeiten bei diesen bekannten Verfahren liegen häufig im möglichst glatten und dünnen Auftrag des Partikelmatelmaterials begründet, wodurch die Schichtstärke, also die kleinste Einheit und damit auch die Genauigkeit, mit der die Gußform hergestellt werden kann, bestimmt wird.

Aus der EP 0 538 244 B1 ist beispielsweise ein Verfahren zum Aufbringen einer Schicht von Pulver auf einen Bereich bekannt, wobei dem Bereich Pulvermaterial zugeführt wird, eine Walze über den Bereich bewegt wird und die Walze dabei entgegen ihrer linearen Bewegungsrichtung über den Bereich gedreht wird. Das Pulvermaterial wird durch die in Gegenrichtung drehende Walze kontaktiert, so daß nach dem Überrollen des Bereichs mit der Walze eine Schicht Pulvermaterial auf dem Bereich gebildet wird. Der Beschichtungsschritt wird dabei derart ausgeführt, daß keine wesentliche Scherspannung auf vorher auf den Bereich aufgebrachte Schichten übertragen und die Form nicht zerstört wird, die ebenfalls in derartig vorher aufgebrachten Schichten erzeugt wurde.

Bei derartigen Verfahren zum Auftragen von Pulver hat es sich jedoch bei stark zu Agglomeraten neigenden Pulvern, wie beispielsweise bei mit Binder versehenem oder sehr feinkörnigen Partikelmaterial, gezeigt, dass nur schwer ein glatter und dünner Auftrag des Partikelmaterials zu erreichen ist, da das Partikelmaterial zum Verklumpen neigt und an der Walze festklebt.

Darüber hinaus zeigt die Verwendung einer gegenläufigen Walze insbesondere beim Einsatz von zum Verklumpen neigenden Partiklmaterial den Nachteil, dass die Verschmutzung aller mit dem Partikelmaterial in Berührung kommenden Teile sehr stark ist und so öfter Wartungsarbeiten notwendig werden, was zu hohen Kosten führt.

Aus der US 6,036,777 ist es bekannt, einen Pulverauftragvorrichtung zum Auftragen von Pulver auf einer Oberfläche vorzusehen. Ein Verteiler, der sich relativ zu einer zu beschichtenden Oberfläche bewegt, verteilt Pulverschichten auf der Oberfläche. Dabei ist zusätzlich ein mit dem Verteiler zusammenwirkender Vibrationsmechanismus zum Kompaktieren des Pulvers vorgesehen.

In der nachveröffentlichten Patentanmeldung DE 101 17 875 wird ein Verfahren und eine Vorrichtung zum Auftragen von Fluiden auf einen zu beschichtenden Bereich beschrieben, wobei vor einer Klinge, in Vorwärtsbewegungsrichtung der Klinge gesehen, das Fluid auf den zu beschichtenden Bereich aufgetragen wird und danach die Klinge über dem aufgetragenem Fluid verfahren wird, dabei führt die Klinge eine Schwingung nach Art einer Drehbewegung aus. Die Klinge schwingt bei der Fahrt über die zu beschichtende Fläche in bestimmter Frequenz um einen Punkt oberhalb des Aufstandspunktes der Klinge auf der Fläche. Die Bewegung selbst beträgt nur wenige Grad, die Amplitude in Fahrtrichtung der Klinge beträgt bei dem gegebenen Hebelverhältnis am Aufstandspunkt der Klinge zwischen 0,5 und 1,5 Millimeter.

Durch die Verwendung derart oszillierender oder schwingender Klingen wird zum Einen eine Verringerung der Scherkräfte auf der Pulveroberfläche erreicht und zum Anderen eine höhere Verdichtung des Pulverbettes als zum Beispiel mit einer stehenden Klinge ermöglicht.

Ein weiterer wesentlicher Vorteil der oszillierenden Klingen ist die Möglichkeit der Beschichtung mit nicht rieselfähigem Partikelmaterial.

Bei diesen Ausführungsform der Klingen, die vertikal oder nach Art einer Drehbewegung schwingen, wird durch die Klinge bei der Beschichtungsfahrt ein Vorrat an Partikelmaterial vor ihr her geschoben, der ausreichen muss, um die Fläche zu beschichten.

Diese Verfahren weisen jedoch einige wesentliche Nachteile auf. So ist die Verdichtung der Schicht abhängig von der Partikelmenge vor der Klinge. Das bedeutet, am Beginn der Beschichtungsfahrt können höhere Verdichtungen im Pulverbett auftreten, als am Ende der Beschichtungsfahrt, wenn der Pulvervorrat schon wesentlich verbraucht wurde. Dieser Verdichtungsunterschied äußert sich z.B. in einer Verschiebungswelle im bereits vorliegenden Pulverbett am Beginn der Beschichterfahrt und damit zur Zerstörung der bereits gedruckten Struktur. Hier kann man zwar gegensteuern, wenn der wirklich benötigte Pulveranteil deutlich geringer als die gesamte Menge vor der Klinge ausfällt. Allerdings ergibt sich dann das Problem, dass entweder der überwiegende Rest des Partikelmaterials nach erfolgter Beschichtung als Abfall entsorgt werden muss, oder über aufwändige Hebemechanismen und eine weitere Beschichterfahrt in entgegengesetzter Richtung wieder in das Ausgangsreservoir zurückgeführt werden muss. Dafür ist ein erhöhter apparativer Aufwand für den Hebemechanismus und die bidirektionale Ausführung der Beschichterklinge notwendig. Nach der zweiten Beschichterfahrt kann der Drucker seine Arbeit aufnehmen. Dies führt insgesamt zu erheblichen Mehrkosten dieser Ausführungsformen.

Ein weiterer Nachteil ist, dass das vor der Klinge befindliche freie Partikelmaterial sich auf der bereits bedruckten Ebene bewegt und zum einen das Druckbild der letzten Schicht beeinträchtigen kann oder beim Einsatz beim Rapid-Prototyping in Kontakt mit dem gedruckten Härter der letzten Schicht kommt, was zu unerwünschten Härtungseffekten an nicht definierten Stellen führt.

Zudem wurde festgestellt, dass sich bei einem bereits mit einer Komponente eines Zweikomponenten-Klebstoffes vermischten Partikelmaterial eine Walze vor der Beschichterklinge ausbildet, die dazu führt, dass zum Teil zu wenig Partikelmaterial unter den Beschichter gelangt und dadurch unerwünschte Fehlstellen in der neu aufgetragenen Schicht entstehen.

Des weiteren führt die ungeführte Partikelmenge an der Beschichterklinge zu einem Abfließen der Partikel auch in Richtung der Klingenlängsachse. Ohne seitliche Begrenzung würde somit eine Art Wall aus Partikelmaterial an der seitlichen Begrenzung entstehen. Ein Wall am Rand der Baufeldebene kann aber nicht akzeptiert werden, da der Drucker in geringem Abstand von der zu bedruckenden Fläche über diese geführt wird und somit unweigerlich in Kontakt mit diesem geraten würde. Dokument WO 95 18715 offenbart eim Verfahren gemäβ dem Oberbegriff des Anspruchs 1 und eine Vorrichtung gemäβ dem Oberbegriff des Anspruchs 5.

Es ist daher Aufgabe der vorliegenden Erfindung ein Verfahren, eine Vorrichtung sowie eine Verwendung der Vorrichtung bereitzustellen mit denen eine noch bessere Verteilung des nur in geringer Menge aufgetragenen Fluids auf einem zu beschichtenden Bereich möglich ist.

Erfindungsgemäβ wird diese Aufgabe gelöst mit einem Verfahren zum Auftragen von Fluiden gemäβ dem Anspruch 1.

Dadurch ist eine starke Verringerung der Scherkräfte auf der Fluidoberfläche und eine höhere Verdichtung möglich.

Dieses Verfahren kann vorzugsweise mit einer Vorrichtung zum Auftragen von Fluiden auf einen zu beschichtenden Bereich gemäβ dem Anspruch 5 durchgeführt werden.

Vorzugsweise ist die Vorrichtung derart vorgesehen, dass der Behälter mit der Klinge verbunden ist.

Gemäß einer bevorzugten Ausführungsform ist der Behälter im wesentlichen als ein Trichter ausgestaltet.

Es wird gemäß einer besonders bevorzugten Ausführungsform der Erfindung vor die Beschichterklinge eine Art nach unten offener Trichter gehängt, der starr mit der Klinge verbunden ist und somit mit ihr mitschwingt. Der Trichter führt den Partikelmaterialvorrat für zumindest eine Beschichterfahrt über die gesamte Länge des Baufeldes mit. Bei Betätigung des Schwingmechanismus des Trichters wird das Partikelmaterial im Trichter fluidisiert und fließt aus dem unten offenen Trichter vor die Klinge. Im anderen Fall verbleibt das Partikelmaterial im Trichter, wenn der Spalt, der die Trichteröffnung definiert, entsprechend eingestellt ist. Der Trichter kann somit eine wesentlich größere Menge an Material mitführen als für die aktuelle Schicht nötig ist.

Damit ergibt sich zum Einen eine wesentlich geringere Menge an Abfallmaterial. Zum Anderen sinken die Anforderungen an das Dosiersystem, das das Partikelmaterial in den Trichter dosiert. Es muss lediglich für eine gleichmäßige Mengenverteilung im Trichter über die Beschichterlängsachse sorgen. Dabei sind bei dem erfindungsgemäßen Verfahren die Auflösung und die Genauigkeit der aus dem Dosiersystem geförderten Menge nur von untergeordneter Bedeutung, wenn die Dosiermenge stets kleiner als das im Trichter zur Verfügung stehende Restvolumen ist. Auf diese Art und Weise wird ein Überfüllen durch einen einzigen Befüllvorgang wirksam vermieden.

Eine mögliche Überfüllung bzw. das Absinken des Vorrats im Trichter könnte vorzugsweise über einen Füllstandssensor überwacht werden und gegebenenfalls kann ein Auffüllen des Trichters aus einem Vorratsbehälter erfolgen.

Die Ausführung des Trichters kann relativ einfach sein. Beispielsweise kann ein der Beschichterlänge entsprechendes Blech über Abstandshalter vor die Beschichterklinge derartig befestigt werden, dass ein Trichter entsteht. Entscheidend für die Funktion der erfindungsgemäßen Vorrichtung sind dabei die Einstellung der Spaltbreite $B_s$ am Trichterausgang und der Höhe des Trichterblechs über der Aufstandsfläche der Beschichterklinge H. Die Höhe H wird bestimmt als der sich ergebende Spalt zwischen der untersten Kante des Trichterbleches und dem Aufstandspunkt der Beschichterklinge bezogen auf die Nulllage des beispielsweise drehschwingenden oder nur schwingenden Systems.

Hierbei ist ersichtlich, dass H bei der Ausführungsform, bei der die Klinge nur in vertikaler, also senkrechter Richtung zum zu beschichtenden Bereich schwingt keine so sehr kritische Größe darstellt, da nicht mehr ein Abtauchen der Klinge durch die Drehbewegung in die vorherige Schicht stattfindet.

Der Trichterwinkel sollte gemäß einer bevorzugten Ausführungsform der Erfindung zwischen 15 und 30 Grad liegen, je nachdem, welches Partikelmaterial eingesetzt wird.

Bei der erfindungsgemäßen Vorrichtung gilt für die Bemessung der Spaltbreite $B_s$ vorzugsweise folgendes:

Wenn $H_s$ die Schichthöhe und $\rho_s$ die erzielte Schüttdichte des Partikelmaterials nach dem Beschichter ist, dann gilt für die Beschichtungsgeschwindigkeit der folgende Zusammenhang:

$$V_B = \frac{\dot{M}_S}{H_S \cdot B_S \cdot \rho_S}$$

Die Spaltbreite $B_s$ muss für ein gutes Beschichtugsergebnis so bemessen sein, dass ein entsprechender Partikelstrom $\dot{M}_T$ aus dem Trichter vor die Beschichterklinge fließen kann, der so groß wie der notwendige Partikelstrom $\dot{M}_s$ für die gewählte Beschichtungsgeschwindigkeit $V_B$ ist, das heißt es gilt

$$\dot{M}_T = \dot{M}_S \, .$$

Ist der Partikelstrom aus dem Trichter kleiner, entstehen Bereiche mit geringerer Schüttdichte bzw. Fehlstellen. Ist der Partikelstrom größer, erhöht sich der Partikeldruck vor der Klinge, was zu Beeinträchtigungen der bereits aufgetragenen Schichten führt. Es entstehen hier Schereffekte innerhalb des Partikelmaterials, was zu den selben negativen Effekten, wie beim Beschichter ohne Trichter, führt.

Der Partikelstrom $\dot{M}_T$ ist dabei von den drei Größen Schwingfrequenz, Spaltbreite $B_s$ und der Höhe H abhängig. Die Vergrö-βerung der genannten Parameter führt zu einem erhöhten Partikelstrom $\dot{M}_T$. Allerdings bewirkt eine zu groß gewählte Spaltbreite $B_s$ hauptsächlich einen höheren Materialdruck auf der letzten Schicht und somit eine höhere Verdichtung des Sandes mit all seinen unerwünschten Nebeneffekten.

Die Höhe H soll mit Hilfe folgender Überlegungen ausgewählt werden:

Der Gesamtaufbau aus Beschichterklinge und Trichterblech bewegt sich bei der Oszillationsbewegung "nach Art einer Drehbewegung" nicht nur in Fahrtrichtung sondern auch vertikal. Der Drehpunkt der Anordnung wird so gewählt, dass sich ein definiter Hub an der Schwingklingenunterseite ergibt. Dieser Hub ermöglicht die kontrollierte Verdichtung der Partikelschüttung. Damit das darunter liegende Druckbild keinen Schaden nimmt, ist der Hub jedoch auf das Partikelmaterial abzustimmen. Verschiedene Partikelmaterialien weisen unterschiedliches Verdichtungspotential auf. Materialien mit geringer Schüttdichte gemessen an der Dichte des Basismaterials können aufgrund der geringen Packungsdichte stärker verdichtet werden (vergleiche Dichte von Quarz 2,5 kg/l und Schüttdichte von Quarzsand 1,4 kg/l). Je nach Materialbeschaffenheit kann ein, gemessen an der Schichtdicke, größerer Hub der Klinge eingestellt werden. Somit kann mehr Partikelmaterial unter die Klinge befördert und durch den Rückhub komprimiert werden.

Das Trichterblech liegt vor der Klinge und führt deshalb bei dieser Ausführungsform eine noch größere Nickbewegung aus. Der Tiefpunkt der Bewegung und damit der Abstand des Trichterblechs H von der Unterseite der Beschichterklinge muss so eingestellt werden, dass das Trichterblech die vorhergehende Schicht nicht berührt.

Die Klinge weist an der Front gemäß einer bevorzugten Ausführungsform einen Radius, bevorzugt im Bereich von r = 2 bis 4 mm auf.

Die Schwingklinge wird bei dem erfindungsgemäßen Verfahren vorzugsweise über Exzenter angetrieben, die auf der Antriebsmotorwelle drehfest angebracht werden. Die Kraftübertragung vom Exzenter auf die Schwingklinge kann beispielsweise formschlüssig, also durch direktes Aufbringen eines Wälzlager auf den Exzenter, oder durch kraftschlüssige Übertragung mittels einer durch Federkraft beaufschlagten Laufrolle auf den Exzenter dargestellt werden.

Wie schon angesprochen eignet sich die erfindungsgemäße Vorrichtung besonders für die Verwendung zum Auftragen von mit Bindemittel versehenem Partikelmaterial und dabei insbesondere bei einem Verfahren zum Aufbau von Gußformen.

Weiterhin kann die erfindungsgemäße Vorrichtung vorzugsweise bei einem Beschichtungsverfahren mit zu Agglomeraten neigendem Partikelmaterial eingesetzt werden.

Weitere vorteilhafte Ausgestaltungen der vorliegenden Erfindung ergeben sich aus den Unteransprüchen sowie der Beschreibung. Bezüglich der weiteren Ausgestaltung des erfindungsgemäßen Verfahrens und der erfindungsgemäßen Vorrichtung wird auf die nachveröffentlichte DE 101 17075 verwiesen, auf deren Offenbarung in vollem Umfang Bezug genommen wird.

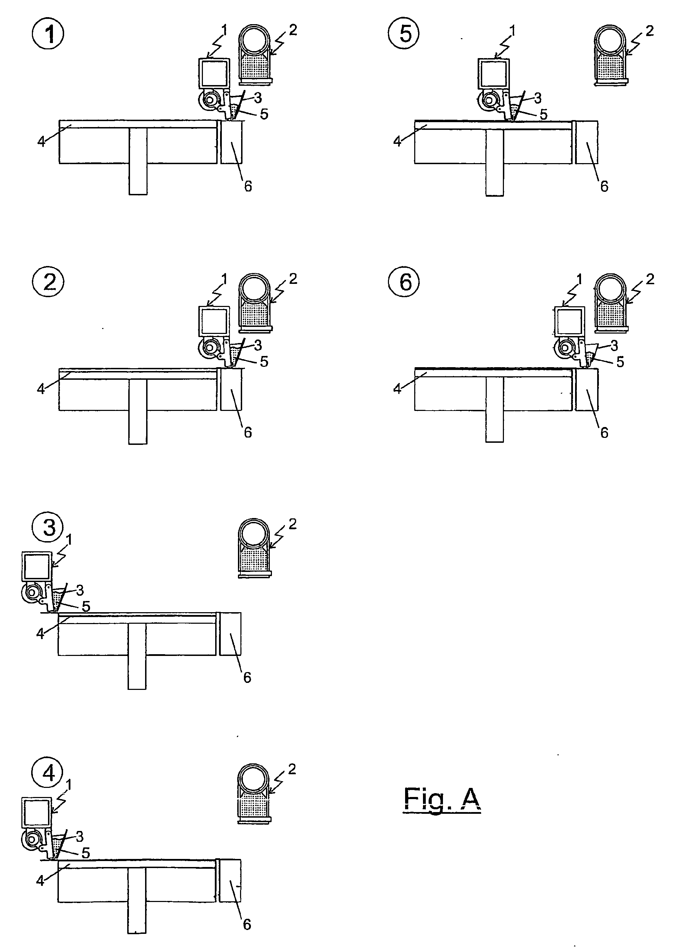

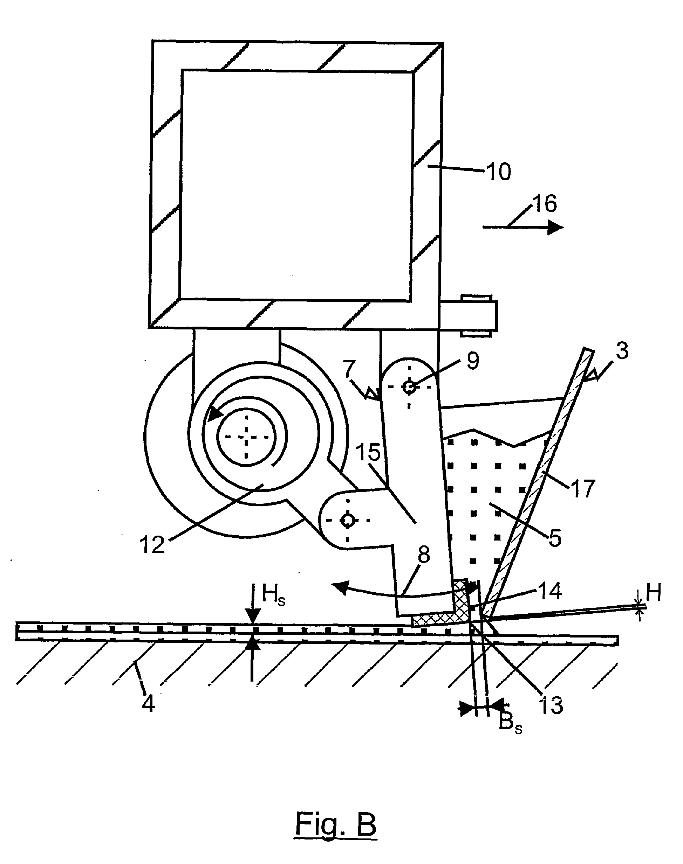

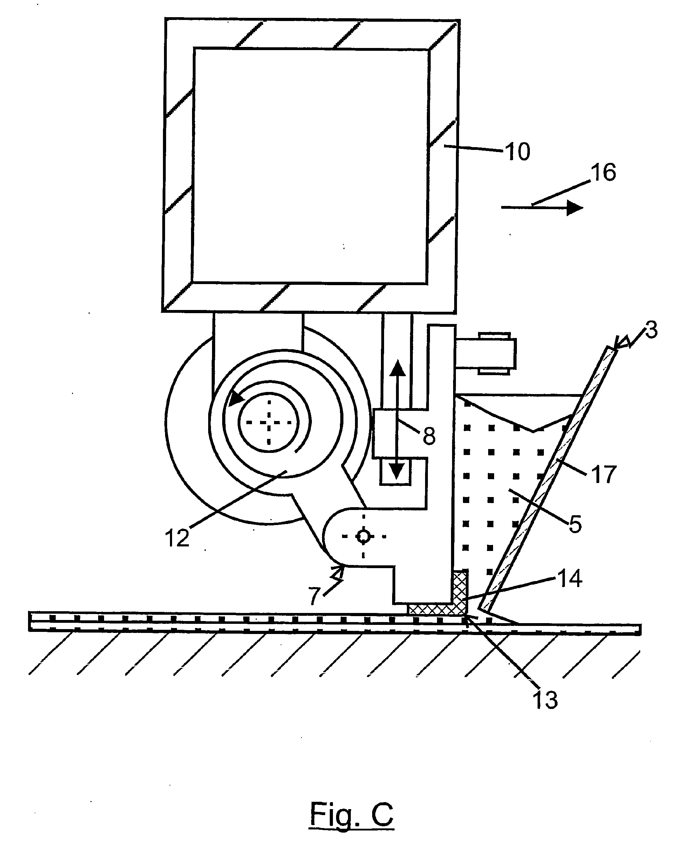

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:

Figur A die Abfolge des erfindungsgemäßen Verfahrens; und

Figur B die erfindungsgemäße Vorrichtung gemäß einer ersten bevorzugten Ausführungsform.

Figur C die erfindungsgemäße Vorrichtung gemäß einer zweiten bevorzugten Ausführungsform.

Beispielhaft soll im folgenden das erfindungsgemäße Verfahren und die erfindungsgemäße Vorrichtung für den Einsatz beim schichtweisen Aufbau von Gussmodellen aus Partikelmaterial, Bindemittel und Härter bei einem Rapid-Prototyping-Verfahren erläutert werden.

Insbesondere soll dabei von einem schon mit Binder versehenen Partikelmaterial ausgegangen werden, das üblicherweise besonders stark zum Verklumpen neigt und daher besondere Anforderungen an das Beschichtungsverfahren stellt.

Die Verwendung eines solchen Partikelmaterials weist jedoch den Vorteil auf, dass der üblicherweise beim Rapid-Prototyping-Verfahren notwendige Schritt des Beschichtens des Partikelmaterials mit Binder entfällt und damit das Aufbauen des Modells schneller und kostengünstiger durchgeführt werden kann.

Insbesondere bei zur Agglomerierung neigenden Partikelmaterialien hat sich der Einsatz des erfindungsgemäßen Verfahrens und der Vorrichtung als vorteilhaft erwiesen.

Neben dem mit Bindemittel versehenen neigen aber beispielsweise auch Partikelmaterialien kleinerer Korngröße von weniger als 20 μm und auch Wachspulver stark zur Agglomerierung, so dass auch für Fluide das erfindungsgemäße Verfahren besonders vorteilhaft ist.

Bezugnehmend auf Figur A wird im Folgenden die Abfolge der Beschichtung gemäß einer bevorzugten Ausführungsform des erfindungsgemäßen Verfahrens beschrieben.

Bei einem Aufbauverfahren, das unter Bezugnahme auf Figur A beschrieben wird, eines Bauteiles, wie eines Gussmodelles, wird eine Bauplattform 4, auf die die Gussform aufgebaut werden soll, um eine Schichtstärke des Partikelmaterials 5 abgesenkt. Danach wird Partikelmaterial 5, beispielsweise Quarzsand, der gemäß einer bevorzugten Ausführungsform mit 1 Gew.% Binder (z.B. Capaset 0401 der Firma Hüttenes, Albertus) versehen ist, in einer erwünschten Schichtstärke aus einem Behälter, hier einem Trichter 3, auf die Bauplattform 4 aufgetragen. Daran schließt sich das selektive Auftragen von Härter auf auszuhärtende Bereiche an. Dies kann beispielsweise mittels eines Drop-on-demand-Tropfenerzeugers, nach Art eines Tintenstrahldruckers, durchgeführt werden. Diese Auftragungsschritte werden wiederholt, bis das fertige Bauteil, eingebettet in loses Partikelmaterial 5, erhalten wird.

Am Anfang steht der Beschichter 1 in der Ausgangslage, was in Figur A1 dargestellt ist. Er wird zunächst über eine Befüllvorrichtung 2 befüllt, wenn der Füllstandsensor ein Unterniveau in einem Behälter, der hierbei als Trichter 3 ausgebildet ist, erkannt hat.

Wie in Figur A2 dargestellt ist, wird im Folgenden zum Aufbau eines Modelles die Bauplattform 4 um mehr als eine Schicht abgesenkt.

Danach fährt der Beschichter 1, wie in Figur A3 gezeigt, ohne Oszillationsbewegung und damit ohne Förderwirkung in die Position gegenüber der Befüllvorrichtung 2, bis er über dem Rand der Bauplattform 4 steht.

Nun wird die Bauplattform 4 genau auf Schichthöhe angehoben, was aus Figur A4 ersehen werden kann. Das heißt, dass die Bauplattform 4 nun genau um eine Schichthöhe abgesenkt ist.

Jetzt beginnt der Beschichter 1 zu oszillieren und fährt in konstanter Fahrt über die Bauplattform 4. Dabei gibt er Partikelmaterial 5 in genau der richtigen Menge ab und beschichtet die Bauplattform 4. Dies ist in Figur A5 gezeigt.

Der Beschichter 1 steht anschließend wieder in der Ausgangsposition und kann bei Bedarf über die Befüllvorrichtung (2) neu befüllt werden. Dies ist in Figur A6 gezeigt, die der Figur A1 entspricht.

Um eine ungleichmäßige Befüllung des Beschichters 1 über seine Länge auszugleichen, kann nach einer bestimmten Zeit der Trichter 3 über dem Abfallbehälter 6 durch Oszillation des Trichters 3 im Stand entleert und anschließend wieder befüllt werden.

Der Druckprozess, bzw. Belichtungsprozess zum Härten des mit Bindemittel versehenen Partikelmaterials 1 kann schon während oder auch nach dem Beschichten erfolgen.

Die Figur B zeigt eine erfindungsgemäße Vorrichtung nach einer bevorzugten Ausführungsform.

Insbesondere auch zur Durchführung des erfindungsgemäßen Verfahrens eignet sich eine Vorrichtung gemäß der gezeigten bevorzugten Ausführungsform zum Auftragen von Partikelmaterial 5 auf einen zu beschichtenden Bereich, wobei eine Klinge 7 in Vorwärtsbewegungsrichtung 16 der Klinge 7 gesehen, eine Dosiervorrichtung aufweist, mittels der auf die Bauplattform 4 Partikelmaterial 5 aufgetragen wird und die Klinge 1 über der Bauplattform 4 verfahren wird. Die Klinge 7 ist dabei derart am Beschichterhauptträger 10 angebracht, dass sie eine Schwingung nach Art einer Drehbewegung durchführen kann. Der Beschichterhauptträger 10 erstreckt sich hierbei über die gesamte Breite der Bauplattform 4 und verfährt über die gesamte Bauplattform 4. Die Drehachse 9 der Klinge 7 ist also gemäß dieser gezeigten bevorzugten Ausführungsform senkrecht zur durch den Pfeil 16 dargestellten Verfahrbewegung und parallel zur Längsachse der Klinge 7.

Die Dosiervorrichtung ist im vorliegenden Fall ein Trichter 3, der durch ein entsprechendes Blech 17, das vor der Klinge 7 über Abstandshalter befestigt ist, gebildet wird.

Das Blech 17 ist dabei derart anbeordnet, dass die Spaltbreite $B_s$ derart bemessen ist, dass

$$V_B = \frac{\dot{M}_s}{H_s \cdot B_s \cdot \rho_s}$$ gilt, wobei $H_s$ die Schichthöhe,

$\rho_s$ die erzielte Schüttdichte des Partikelmaterials nach dem Beschichten, $\dot{M}_T$ ein Partikelstrom aus dem Trichter 3; und $\dot{M}_s$ der notwendige Partikelstrom für die gewählte Beschichtungsgeschwindigkeit $V_B$ ist.

Der Abstand H des Blechs 17 des Trichters 3 von der Unterseite der Klinge 7 ist gemäß dieser dargestellten Ausführungsform so klein wie möglich und so eingestellt, dass das Blech die vorhergehende Schicht nicht berührt.

Der Gesamtaufbau bestehend aus Klinge 7 und Trichter 3 bewegt sich bei der Oszillationsbewegung nicht nur in Fahrtrichtung, die durch den Pfeil 16 angedeutet ist, sondern auch vertikal. Die Oszillationsbewegung wird durch den Pfeil 8 angedeutet. Der Drehpunkt 9 der Anordnung der Klinge 7 wird so gewählt, dass sich, wie oben näher beschrieben, ein definiter Hub in Richtung des Pfeils 8 an der Klingenunterseite ergibt.

Die Klinge ist so angebracht, dass die Drehbewegung der Klinge um eine Drehachse 9 erfolgt, die in Richtung in Aufbaurichtung des Partikelmaterials 5 gesehen, oberhalb des zu beschichtenden Bereiches liegt und ist so angebracht, dass die Drehbewegung im Bereich eines Drehwinkels von 0,1 bis 5 Grad liegt.

Das Zuführen des Partikelmaterials 5 in den Trichter 3 aus der Befüllvorrichtung 2 kann hierbei auf jede erdenkliche, dem Fachmann bekannte Art und Weise erfolgen. So wäre es denkbar, dass beispielsweise eine Zufuhr über ein Förderband aus einem Reservoir erfolgt.

Insbesondere ist es möglich, dass die Zufuhr auf eine in der DE 195 30 295, auf deren Offenbarung in vollem Umfang Bezug genommen wird, beschriebene Art und Weise erfolgt.

Die Vorrichtung ist auch derart ausgestaltet, dass ein Antrieb der Klinge 1 über zumindest einen schnell laufenden Elektromotor, der über einen Exzenter 12 die Klinge 7 zum Schwingen bringt, erfolgt.

Der verwendete Motor zum Antreiben des Exzenters 12 hat hierbei beispielsweise eine Nenndrehzahl bei 12 V von 3000 U/min, der Hub des Exzenters beträgt 0,54 mm, was gemäß dem beschriebenen Beispiels einer Amplitude an der Klingenspitze von 0,85 mm entspricht. Bei 15 V wurde eine Drehzahl von 4050 U/min gemessen. Dieser Wert entspricht 67,5 Hz. Je nach Breite der Klinge 7 kann es notwendig sein, mehrere Anlenkungspunkte vorzusehen.

Die Klinge weist weiterhin verrundete Kanten 13 auf, so dass der Einlass für Partikelmaterial 5 durch einen Radius gebildet wird, der an einer Kante der Klinge 1 gebildet ist. Dies kann zum Beispiel durch leichtes Brechen der Kanten erreicht werden oder, wie schon beschrieben über die Ausgestaltung der Kanten als Radien vorzugsweise im Bereich von 2 bis 4 mm erreicht werden.

Ist die Klinge 1 gemäß einer weiteren bevorzugten Ausführungsform aus zwei Teilen, einem geformten Klingenkörper 14 und einem Halter 15 aufgebaut, dann kann der Klingenkörper abgeschraubt werden und auch ausgetauscht werden, wenn beispielsweise der Klingenkörper 14 verschleißgeschädigt ist.

Die Figur C zeigt eine weitere Ausführungsform die nicht zu der Erfindung gehört. Der wesentliche Unterschied zur in Figur B gezeigten Ausführungsform ist hierbei, dass die Schwingung der Klinge 7 und des Behälters 3 nicht nach Art einer Drehbewegung, sondern in vertikaler Richtung erfolgt. Vertikal bedeutet hier, im wesentlichen senkrecht zu Bauplattform 4. Die Schwingbewegung ist durch den Pfeil 8 dargestellt. Ansonsten entsprechen die mit den gleichen Bezugszeichen versehenen gezeigten Elemente den in der Figur B dargestellten.

Bei dieser gezeigten bevorzugten Ausführungsform hat es sich gezeigt, dass eine noch höhere Verdichtung des Partikelmaterials durch eine größere Vertikalamplitude und Schwingfrequenz erreicht werden kann. Dadurch wird es möglich, dass die Beschichterfahrt mit einer noch höheren Geschwindigkeit erfolgen kann.

**Patentansprüche**

1. Verfahren zum Auftragen von Fluiden, insbesondere Partikelmaterial, auf einen zu beschichtenden Bereich, wobei vor einer Klinge, in Vorwärtsbewegungsrichtung der Klinge gesehen, das Fluid auf den zu beschichtenden Bereich aufgetragen wird und danach die Klinge über dem aufgetragenen Fluid verfahren wird und dabei die Klinge eine Schwingung ausführt, und wobei das Fluid (5) aus einem nach unten, in Richtung des zu beschichtenden Bereichs, offenen, mit der Kling (7) schwingenden Behälter (3) zugeführt wird und **dadurch gekennzeichnet**, daß die Schwingung nicht nur in Fahrtrichtung sondern auch vertikal nach Art einer Drehbewegung erfolgt.

2. Verfahren nach Anspruch 1, wobei eine Dosiermenge des Fluids (5) stets kleiner als ein im Behälter (3) zur Verfügung stehendes Restvolumen des Fluids (5) ist.

3. Verfahren nach einem der vorhergehenden Ansprüche, wobei die Klinge (7) über Exzenter (12) angetrieben wird.

4. Verfahren nach Anspruch 3, wobei eine Kraftübertragung vom Exzenter (12)auf die Klinge (7)formschlüssig oder kraftschlüssig erfolgt.

5. Vorrichtung zum Auftragen von Fluiden, insbesondere bei einem Verfahren nach einem der vorhergehenden Ansprüche, auf einen zu beschichtenden Bereich, wobei eine Klinge und in Vorwärtsbewegungsrichtung der Klinge gesehen vor der Klinge eine Dosiervorrichtung vorgesehen ist, mittels der auf den zu beschichtenden Bereich Fluid aufgetragen wird und die Klinge über dem aufgetragenen Fluid verfahren wird und derart angebracht ist, dass sie eine Schwingung ausführen kann, und wobei die Dosiervorrichtung ein nach unten in Richtung des zu beschichtenden Bereichs gesehen, offener, das Partikelmaterial (5) enthaltender, mit der Klinge (7) schwingender Behälter (3) ist, **dadurch gekennzeichnet**, daβ die Schwingung nach Art einer Dichberwegung nicht nur in Fahrtrichtung sondern auch vertikal erfolgt.

6. Vorrichtung nach Anspruch 5, wobei der Behälter (3) mit der Klinge (7) verbunden ist.

7. Vorrichtung nach einem der Ansprüche 5 oder 6, wobei der Behälter (3) im wesentlichen ein Trichter ist.

8. Vorrichtung nach einem der Ansprüche 5 bis 7, wobei der Behälter (3) im wesentlichen durch ein entsprechendes Blech (17), das vor der Klinge (7) befestigt ist, gebildet ist.

9. Vorrichtung nach einem der Ansprüche 5 bis 8, wobei der Behälter (3) einen Füllstandssensor aufweist.

10. Vorrichtung nach einem der Ansprüche 5 bis 9, wobei eine Spaltbreite $B_s$ derart bemessen ist, dass

$$V_B = \frac{\dot{M}_s}{H_s \cdot B_s \cdot \rho_s}$$ gilt, wobei

$H_s$ die Schichthöhe;
$\rho_s$ die erzielte Schüttdichte des Fluids nach dem Beschichten; und
$\dot{M}_s$ der notwendige FLuidstrom für die gewählte Beschichtungsgeschwindigkeit $V_B$ ist.

11. Vorrichtung nach einem der Ansprüche 8 bis 10, wobei der Abstand des Blechs H von der Unterseite der Klinge (7) so klein wie möglich ist und so eingestellt ist, dass das Blech die vorhergehende Schicht nicht berührt.

12. Vorrichtung nach einem der Ansprüche 5 bis 11, wobei die Klinge (7) an ihrer Front einen Radius aufweist.

13. Verwendung der Vorrichtung nach einem der Ansprüche 5 bis 12 zum Auftragen von mit Bindemittel versehenem Partikelmaterial (5).

14. Verwendung der Vorrichtung nach einem der Ansprüche 5 bis 12 bei einem Verfahren zum Aufbau von Gussmodellen und Gussformen.

15. Verwendung der Vorrichtung nach einem der Ansprüche 5 bis 12 bei einem Beschichtungsverfahren mit zu Agglomeraten neigendem Partikelmaterial.

**Claims**

1. A method for applying fluids, in particular particulate material, onto an area to be coated, wherein the fluid is applied onto the area to be coated, in front of a blade, viewed in the forward direction of the blade, and thereafter the blade is moved over the applied fluid, the blade performing a oscillation, and wherein the fluid (5) is supplied from a container (3), which is open at the bottom, in the direction of the area to be coated, and oscillates along with the blade (7), and **characterised in that** the oscillation is effected not only in the direction of travel but also vertically, in the manner of a rotary movement.

2. The method according to claim 1, wherein a dosage of the fluid (5) is always smaller than a residual volume of the fluid (5) available in the container (3).

3. The method according to any one of the preceding claims, wherein the blade (7) is driven via an eccentric (12).

4. The method according to claim 3, wherein force is transmitted from the eccentric (12) to the blade (7) in a form-fitting or force-fitting manner.

5. A device for applying fluids, in particular in a method according to any one of the preceding claims, onto an area to be coated, wherein a blade and a dosage device, arranged in front of the blade when viewed in the forward direction of the blade, are provided, by means of which fluid is applied onto the area to be coated and the blade is moved over the applied fluid and is attached such that it can effect a oscillation, and wherein the dosage device is a container (3), which is open at the bottom, when viewed in the direction of the area to be coated, contains the particulate material (5) and oscillates along with the blade (7), **characterised in that** the oscillation is effected in the manner of a rotary movement not only in the direction of travel, but also vertically.

6. The device according to claim 5, wherein the container (3) is connected with the blade (7).

7. The device according to any one of claims 5 or 6, wherein the container (3) is substantially a funnel.

8. The device according to any one of claims 5 to 7, wherein the container (3) is substantially formed by a suitable metal plate (17) fixed in front of the blade (7).

9. The device according to any one of claims 5 to 8, wherein the container (3) comprises a level sensor.

10. The device according to any one of claims 5 to 9, wherein a gap width $B_s$ is dimensioned such that

$$V_B = \frac{M_S}{H_S \cdot B_S \cdot \rho_S}$$

applies, wherein

Hs is the layer height;
$\rho_s$ is the bulk density of the fluid achieved after coating, and
$M_s$ is the required stream of fluid for the selected coating rate $V_B$.

11. The device according to any one of claims 8 to 10, wherein the distance of the metal plate H from the bottom surface of the blade (7) is as small as possible and is set such that the metal plate does not touch the preceding layer.

12. The device according to any one of claims 5 to 11, wherein the blade (7) has a radius at its front end.

13. Use of the device according to any one of claims 5 to 12 for applying particulate material (5) provided with a binding agent.

14. Use of the device according to any one of claims 5 to 12 in a method for structuring casting patterns and casting moulds.

15. Use of the device according to any one of claims 5 to 12 in a coating method using particulate material with a tendency to agglomerate.

**Revendications**

1. Procédé d'application de fluides, notamment de matériau en particules, sur une zone à enduire, dans lequel procédé le fluide est appliqué sur ladite zone à enduire, en avant d'une lame, vue dans la direction de marche avant de ladite lame, et puis ladite lame est déplacée à travers le fluide appliqué, tout en exécutant une oscillation, et dans lequel procédé le fluide (5) est alimenté à partir d'un réservoir (3) qui est ouvert vers le bas, en direction de la zone à enduire, et qui oscille ensemble avec la lame (7), ledit procédé étant **caractérisé en ce que** ladite oscillation est effectuée non seulement en direction de marche, mais aussi verticalement, à la manière d'une rotation.

2. Procédé selon la revendication 1, dans lequel la quantité de dosage du fluide (5) est constamment inférieure à un volume résiduel du fluide (5) disponible dans le réservoir (3).

3. Procédé selon l'une quelconque des revendications précédentes, dans lequel ladite lame (7) est entraînée par un excentrique (12).

4. Procédé selon la revendication 3, dans lequel une transmission de force de l'excentrique (12) à la lame (7) se fait au moyen d'un raccordement par forme ou par force.

5. Dispositif pour l'application de fluides, notamment dans un procédé selon l'une quelconque des revendications précédentes, sur une zone à enduire, dans lequel on prévoit une lame et un dispositif de dosage, disposé en avant de ladite lame en vue dans la direction de marche avant de ladite lame, au moyen duquel le fluide est appliqué sur la zone à enduire, et la lame est déplacée à travers le fluide appliqué et est montée de manière à pouvoir effectuer une oscillation, et dans lequel le dispositif de dosage est un réservoir (3), qui est ouvert vers le bas, en vue dans la direction de la zone à enduire, contient le matériau en particules (5) et oscille ensemble avec la lame (7), **caractérisé en ce que** ladite oscillation est effectuée à la manière d'une rotation non seulement dans la direction de marche, mais aussi verticalement.

6. Dispositif selon la revendication 5, dans lequel le réservoir (3) est relié avec la lame (7).

7. Dispositif selon l'une quelconque des revendications 5 ou 6, dans lequel le réservoir (3) est sensiblement un entonnoir.

8. Dispositif selon l'une quelconque des revendications 5 à 7, dans lequel le réservoir (3) est sensiblement constitué d'une tôle (17) montée en avant de ladite lame (7).

9. Dispositif selon l'une quelconque des revendications 5 à 8, dans lequel le réservoir (3) comprend un capteur de niveau.

10. Dispositif selon l'une quelconque des revendications 5 à 9, dans lequel une largeur d'entrefer B, est dimensionnée de sorte que

$$V_B = \frac{M_S}{H_S \cdot B_S \cdot \rho_S}$$

soit valable, où

$H_s$ est la hauteur de couche:

$\rho_s$ est la densité en vrac au fluide atteinte après l'enduction, et

$M_s$ est le flux fluidique nécessaire pour la vitesse d'enduction sélectionnée $V_s$.

11. Dispositif selon l'une quelconque des revendications 8 à 10, dans lequel la distance de la tôle H à la face inférieure de la lame (7) est minimale et est ajustée de manière à ce que la tôle ne touche pas la couche précédante.

12. Dispositif selon l'une quelconque des revendications 5 à 11, dans lequel la lame (7) présente un radius à son extrémité avant.

13. Utilisation du dispositif selon l'une quelconque des revendications 5 à 12 pour appliquer du matériau en particules (5) comprenant un agent liant.

14. Utilisation du dispositif selon l'une quelconque des revendications 5 à 12 dans un procédé pour la constitution de modèles de fonderie ou d'une moule.

15. Utilisation du dispositif selon l'une quelconque des revendications 5 à 12 dans un procédé d'enduction utilisant du matériau en particules avec une tendance d'agglomérer.

Fig. A

Fig. B

Fig. C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19853834
- EP 0538244 B1
- US 6036777 A
- DE 10117875
- WO 9518715 A
- DE 10117075
- DE 19530295